# EUROPÄISCHE PATENTSCHRIFT

(11) **EP 1 183 748 B1**
(45) Veröffentlichungstag und Bekanntmachung des Hinweises auf die Patenterteilung: **05.03.2003**
(21) Anmeldenummer: 00917062.2
(22) Anmeldetag: 08.04.2000
(51) Int. Cl.: H01M 8/24, H01M 8/10, H01M 8/02

(54) **BRENNSTOFFZELLE MIT POLYMERELEKTROLYT**
FUEL CELL WITH POLYMER ELECTROLYTE
PILE A COMBUSTIBLE A ELECTROLYTE POLYMERE

(30) Priorität: 10.04.1999 DE 19916239
(43) Veröffentlichungstag der Anmeldung: 06.03.2002
(73) Patentinhaber: H2-Interpower Brennstoffzellensysteme GmbH, 91126 Schwabach (DE)
(72) Erfinder: RUTHROF, Klaus, D-91126 Schwabach (DE); GOSEBRUCH, Harald, D-27283 Verden (DE)
(74) Vertreter: Patentanwälte Rehberg + Hüppe
(86) Internationale Anmeldenummer: EP0003148
(87) Internationale Veröffentlichungsnummer: WO00062363

(56) Entgegenhaltungen:
- WO-A-94/05051
- WO-A-94/09519
- WO-A-94/11912
- WO-A-98/16963
- DE-A- 19 624 887
- US-A- 3 468 712
- US-A- 5 607 785
- US-A- 5 846 668
- PATENT ABSTRACTS OF JAPAN vol. 1999, no. 04, 30. April 1999 (1999-04-30) -& JP 11 016591 A (MATSUSHITA ELECTRIC IND CO LTD), 22. Januar 1999 (1999-01-22)
- PATENT ABSTRACTS OF JAPAN vol. 010, no. 082 (E-392), 2. April 1986 (1986-04-02) -& JP 60 227361 A (FUJI DENKI SOUGOU KENKYUSHO:KK;OTHERS: 01), 12. November 1985 (1985-11-12)
- PATENT ABSTRACTS OF JAPAN vol. 010, no. 317 (E-449), 28. Oktober 1986 (1986-10-28) -& JP 61 128470 A (HITACHI LTD), 16. Juni 1986 (1986-06-16)

## Beschreibung

Die Erfindung bezieht sich auf eine Brennstoffzelle, mit einer zentralen Polymermembran, mit die Polymermembran beidseitig bedeckenden Diffusorschichten, mit die Diffusorschichten rückwärtig flächig abstützenden, Durchbrechungen aufweisenden Flächenelektroden und mit einer mindestens einen Gasanschluß aufweisenden rückwärtigen Abdeckung für mindestens eine der Flächenelektroden.

Brennstoffzellen mit zentraler Polymermembran, auf die sich die Erfindung im speziellen bezieht, werden auch als PEM-Brennstoffzellen bezeichnet. Das Kürzel PEM steht für Polymer-Elektrolyt-Membran bzw. Proton-Exchange-Membran. Bei PEM-Brennstoffzellen gelangt über eine der beiden Diffusorschichten Sauerstoff oder ein Sauerstoff enthaltendes Gas an die Polymermembran, während über die andere Diffusorschicht Wasserstoffgas oder ein anderes Brenngas bis an die Polymermembran diffundiert. Das bei der Verbrennung des Brenngases entstehende Wasser fällt in der Sauerstoffdiffusorschicht an und muß aus dieser wieder abgeführt werden. Der von der Brennstoffzelle erzeugte Strom wird über die Flächenelektroden abgegriffen, die zur Einhaltung eines geringen Innenwiderstands der Brennstoffzelle in innigem Kontakt mit den Diffusorschichten stehen müssen, die wiederum in innigem Kontakt mit der Polymermembran stehen müssen.

Eine PEM-Brennstoffzelle der eingangs beschriebenen Art ist beispielsweise aus der DE 298 03 325 U1 bekannt. Die hier für die Flächenelektrode auf der Seite der Brenngasdiffusorschicht vorgesehene Abdeckung wird von einem Gehäuse der Brennstoffzelle aus Kunststoff ausgebildet. Das Gehäuse umgibt die Polymermembran, die Diffusorschichten und die Flächenelektroden nicht nur rückwärtig sondern auch seitlich. Auf der Seite der Sauerstoffdiffusorschicht ist eine zur Umgebung hin offene Abstützung der angrenzenden Flächenelektrode vorgesehen. Beide Flächenelektroden sind bei der bekannten Brennstoffzelle als feinmaschige Siebbleche ausgebildet, um einen großflächigen Zugang des jeweiligen Gases zu der vor der Flächenelektrode befindlichen Diffusorschicht zu ermöglichen. Die bekannte Brennstoffzelle ist sehr gut als Anschauungsobjekt für den grundsätzlichen Aufbau und die Leistungsfähigkeit von Brennstoffzellen geeignet. Sie ist jedoch nicht dafür vorgesehen, größere Ströme zu erzeugen. Zur Erzeugung größerer Spannungen müssen PEM-Brennstoffzellen, die je nach Arbeitspunkt jeweils eine Ausgangsspannung von etwa 0,3 bis 1 Volt liefern, immer in Reihe geschaltet werden.

Eine weitere Brennstoffzelle ist aus der US 5,879,826 bekannt. Die Brennstoffzelle weist eine zentrale Membran und die Membran beidseitig umgebende poröse Elektroden auf. Die porösen Elektroden sind wiederum beidseitig von elektrisch leitenden Platten umgeben. Die Platten weisen einen Gaseinlaß und einen Gasauslaß auf, die über eine Vielzahl von parallelen, in Richtung der porösen Elektroden offen augebildeten Gasführungskanälen miteinander verbunden sind.

Der Erfindung liegt die Aufgabe zugrunde, einen Aufbau für eine Brennstoffzelle aufzuzeigen, der eine einfache großindustrielle Herstellung von Brennstoffzellen mit hoher Leistung ermöglicht.

Erfindungsgemäß wird diese Aufgabe durch eine Brennstoffzelle mit den Merkmalen des Anspruchs 1 gelöst.

Die neue Brennstoffzelle löst das Problem der Gasversorgung über große Baueinheiten hinweg, die für das Bereitstellen großer Leistungen erforderlich sind. Durch die Gasführungskanäle können das Brenngas und/oder der Sauerstoff mit Überdruck in die jeweilige Diffusorschicht eingebracht werden, wobei der Überdruck sinnvoller Weise nur in einem von zwei Gasführungskanälen vorherrscht, während der andere Gasführungskanal auf einem niedrigeren Druck gehalten oder auf einen Unterdruck eingestellt wird. Das Brenngas bzw. der Sauerstoff werden so von dem einen Gasführungskanal durch die Diffusorschicht in deren Haupterstreckungsebene bis in den anderen Gasführungskanal hindurchgedrückt und stehen damit an der Polymermembran immer in ausreichendem Maße zur Verfügung. Zudem kann bei der Reaktion in der Brennstoffzelle entstehendes Wasser aus der Sauerstoffdiffusorschicht abgeführt werden und es können andere Stoffe an die Polymermembran herangebracht werden, wie beispielsweise Wasser auf der Seite der Brenngasdiffusorschicht. Der Querschnitt der Gasführungskanäle, deren Anzahl auch größer als zwei sein kann und die nicht nur paarweise sondern beispielsweise auch als Trio mit zwei äußeren Gasführungskanälen unter Überdruck und einem inneren Gasführungskanal auf Normaldruck angeordnet sein können, kann im Vergleich zu der Dicke der Diffusorschichten relativ groß gewählt werden. So kann auch bei einer sehr großen Baulänge der Brennstoffzelle in der Haupterstreckungsrichtung der Gasführungskanäle eine ausreichende Versorgung der Brennstoffzelle über die gesamte Baulänge sichergestellt werden. Vorzugsweise sind die Durchbrechungen in den Flächenelektroden bei der neuen Brennstoffzelle in den am weitesten voneinander entfernten Bereichen der beiden Gasführungskanäle vorgesehen, so daß der Druckunterschied zwischen den beiden Gasführungskanälen über die gesamte unter der Flächenelektrode befindliche Diffusorschicht ausgenutzt wird. Um den Druckunterschied zwischen den beiden Gasführungskanälen aufzubauen, müssen diese gegeneinander und gegenüber der Umgebung abgedichtet sein. Eine Trennwand zwischen den beiden Gasführungskanälen wird bei der neuen Brennstoffzelle auch zum Aufbau einer Anpreßkraft für die angrenzende Flächenelektrode an die darunter liegende Diffusorschicht genutzt.

Während es sich bei den Flächenelektroden der neuen Brennstoffzelle um einfache gelochte Blechbandabschnitte oder anderes gelochtes Band- bzw. Streifenmaterial handeln kann, werden die Abdeckungen vorzugsweise unter Verwendung von Endlosprofilabschnitten ausgebildet. Hierbei kann es sich wiederum beispielsweise um formgewalzte Blechprofilabschnitte handeln. Es ist aber grundsätzlich auch denkbar, die Abdeckungen aus oder unter Verwendung von endlos extrudierten Kunststoffprofilen auszubilden.

Bei der Ausbildung der Abdeckungen und der Flächenelektroden aus Metall können diese in vorteilhafter Weise miteinander verschweißt oder verlötet werden, beispielsweise mit einem Laser. Bei Abdeckungen und/oder Flächenelektroden auf der Basis von Kunststoffprofilen kann eine dichtenden Verbindung möglicherweise ebenfalls durch lokales Aufschmelzen erreicht werden; besser geeignet ist in diesen Fällen jedoch eine Verklebung und/oder ein Vergießen der relevanten Bereiche. Durch eine Verschweißung bzw. eine Verklebung und/oder ein Vergießen kann die Abdichtung der Endlosprofilabschnitte für die Abdeckungen auch an den Abschnittsenden erfolgen. Dabei können die Gasanschlüsse mit eingebunden werden.

Für die Ausbildung der Flächenelektroden aus einem nichtmetallischen Material kommt vor allem Graphit als leitende Komponente für die Flächenelektroden in Frage. Das Graphit kann eine Armierung aus elastischem und/oder flexiblem Kunststoff und/oder aus einer Metallfolie aufweisen, die auch die elektrische Leitfähigkeit des Graphits verbessert. Die Abdeckungen können dabei aus Materialkombinationen ausgebildet werden, die bereits kommerziell verfügbar sind.

Als Profilform für einen Endlosprofilabschnitt für die Abdeckungen ist besonders gut ein doppeltes Hutprofil geeignet, wobei die äußeren und mittleren Hutränder zum dichtenden Verbinden mit der jeweiligen Flächenelektrode vorgesehen sind. Grundsätzlich ist auch denkbar, die Abdeckung aus zwei parallel verlaufenden getrennten Hutprofilabschnitten auszubilden, die jeweils über eine Reihe von Durchbrechungen in einer Flächenelektrode angeordnet und abgedichtet mit diesem verbunden sind. In diesem Fall wird jedoch keine Stabilisierung der Brennstoffzelle über ihre gesamte Breite durch die Abdeckungen erreicht, da diese geteilt sind und eine Unterbrechung aufweisen. Die Stabilisierung ist aber für den innigen Kontakt der Flächenelektroden mit den darunter befindlichen Diffusorschichten wichtig, um den inneren Widerstand der Brennstoffzelle möglichst klein zu halten.

Besonders gut ist die neue Brennstoffzelle für solche Aufbauten geeignet, in denen sie selbst bzw. Ihre Diffuserschichten in der Haupterstreckungsrichtung der Gasführungskanäle eine Länge aufweist bzw. aufweisen, die um ein Vielfaches größer ist, als ihre dazu senkrecht verlaufende Breite. Dabei können die entgegengesetzten elektrischen Pole für einen einfachen Stromabgriff von der Brennstoffzelle an den einander gegenüberliegenden Längskanten der Brennstoffzelle ausgebildet sein. Das bedeutet, daß an der einen Längskante ein Anschluß an die eine Flächenelektrode und an der anderen Längskante ein Anschluß an die andere Flächenelektrode möglich ist. Konkret können die entgegengesetzten elektrischen Pole durch einzeln überstehende Ränder der Flächenelektroden und/oder der elektrisch leitend mit den Flächenelektroden verbundenen Abdeckungen ausgebildet sein.

Wenn eine solche Brennstoffzelle der Länge der Gasführungskanäle nach aufgewickelt ist, kann die Kontaktierung der elektrischen Pole an der Brennstoffzelle durch zwei einander gegenüberliegende Kontaktplatten erfolgen, die an den Längskanten anliegen. Durch ein Aufwickeln der neuen Brennstoffzelle kann gezielt eine Kontaktkraft der Flächenelektroden auf die darunterliegenden Diffusorschichten aufgebaut werden, was, wie bereits erwähnt wurde, für die Begrenzung des elektrischen Innenwiderstands der Brennstoffzelle von Vorteil ist. Grundsätzlicher Vorteil einer aufgewickelten Brennstoffzelle sind ihre auf ihre aktive Fläche bezogen kleinen Gesamtabmessungen.

Bei der Wickelanordnung der Brennstoffzelle kann zwischen den rückwärtig aneinander anliegenden Abdeckungen mindestens ein spiralförmiger Kühlwasserkanal ausgebildet sein. Dies ist besonders einfach im Bereich einer Isolationsschicht zu realisieren, die zwischen rückwärtig aneinander anliegenden Abdeckungen von beiden ungleichnamigen Flächenelektroden eingewickelt ist.

Bei einer Weiterentwicklung der neuen aufgewickelten Brennstoffzelle kann als Paar bzw. anstelle eines Paars von Abdeckungen zwischen zwei ungleichnamigen Flächenelektroden eine weitere Polymermembran mit angrenzenden Diffusorschichten und mit diese abstützenden Flächenelektroden eingewickelt sein, wobei dann immer gleichnamige Flächenelektroden unter Einschluß der Gasführungskanäle aneinander grenzen. Bei andere Sichtweise liegen zwei ineinander gewickelte und parallel geschaltete Brennstoffzellen vor, wobei außer Abstandhaltern zwischen den Flächenelektroden zur Ausbildung der Gasführungskanäle keine zusätzlichen Bauteile für die Abdeckungen benötigt werden. Insbesondere eine separate Isolationsschicht zwischen irgendwelchen Abdeckungen gibt es bei dieser Ausführungsform der neuen Brennstoffzelle nicht.

Die aufgewickelten Brennstoffzellen eignen sich zur kompakten Reihenschaltung durch Stapelbildung unter Zwischenordnung von kreis- oder ringförmigen Kontaktplatten.

Gerade bei der Ausbildung einer Wickelanordnung können relativ große Kräfte senkrecht zu der Haupterstreckungsebene der Diffusorschichten auf die äußeren Abdeckungen einwirken, mit denen die Gefahr verbunden ist, daß die Gasführungskanäle eingedrückt werden. In diesen Fällen kann es vorteilhaft sein, wenn in den Gasführungskanälen Stabilisierungskörper zur Stabilisierung des freien Querschnitts der Gasführungskanäle angeordnet sind. Dabei kann es sich beispielsweise um Strangmaterial mit einem sehr großen offenen freien Volumen handeln, das die Gasdurchströmung der Gasführungskanäle möglichst wenig behindert.

Die Erfindung wird im folgenden anhand von Ausführungsbeispielen näher erläutert und beschrieben. Dabei zeigt
- Figur 1: eine Explosionsdarstellung des Schichtaufbaus einer ersten Ausführungsform der neuen Brennstoffzelle mit Flächenelektroden und Abdeckungen aus Blech,
- Figur 2: eine perspektivische Ansicht eines Querschnitts durch die Ausführungsform der neuen Brennstoffzelle gemäß Figur 1,
- Figur 3: einen Längsschnitt im Bereich zwischen einer Flächenelektrode und einer Abdeckung durch die Ausführungsform der neuen Brennstoffzelle gemäß Figur 1,
- Figur 4: eine ihrer Länge nach aufgewickelte neue Brennstoffzelle in der Ausführungsform gemäß Figur 1,
- Figur 5: eine Reihenschaltung einer Mehrzahl von neuen Brennstoffzellen gemäß Figur 4,
- Figur 6: eine zweite Ausführungsform der neuen Brennstoffzelle mit Flächenelektroden und Abdeckungen aus Blech im Querschnitt,
- Figur 7: einen Querschnitt durch eine gegenüber Figur 6 abgewandelte Ausführungsform der neuen Brennstoffzelle,
- Figur 8: einen Querschnitt durch eine weitere gegenüber Figur 6 abgewandelte Ausführungsform der neuen Brennstoffzelle,

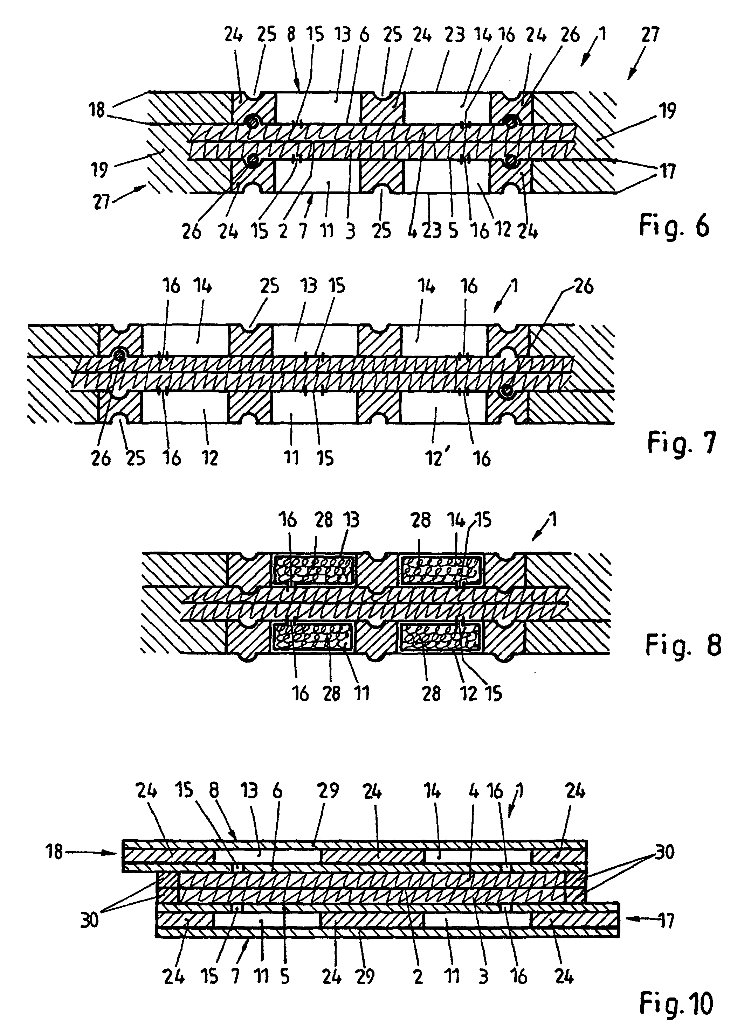

- Figur 7: einen Querschnitt durch noch eine weitere gegenüber Figur 6 abgewandelte, ihrer Länge nach aufgewickelte Ausführungsform der neuen Brennstoffzelle und
- Figur 10: eine weitere Ausführungsform der neuen Brennstoffzelle mit Flächenelektroden und Abdeckungen aus in Kunststoff eingebettetem Graphit im Querschnitt.

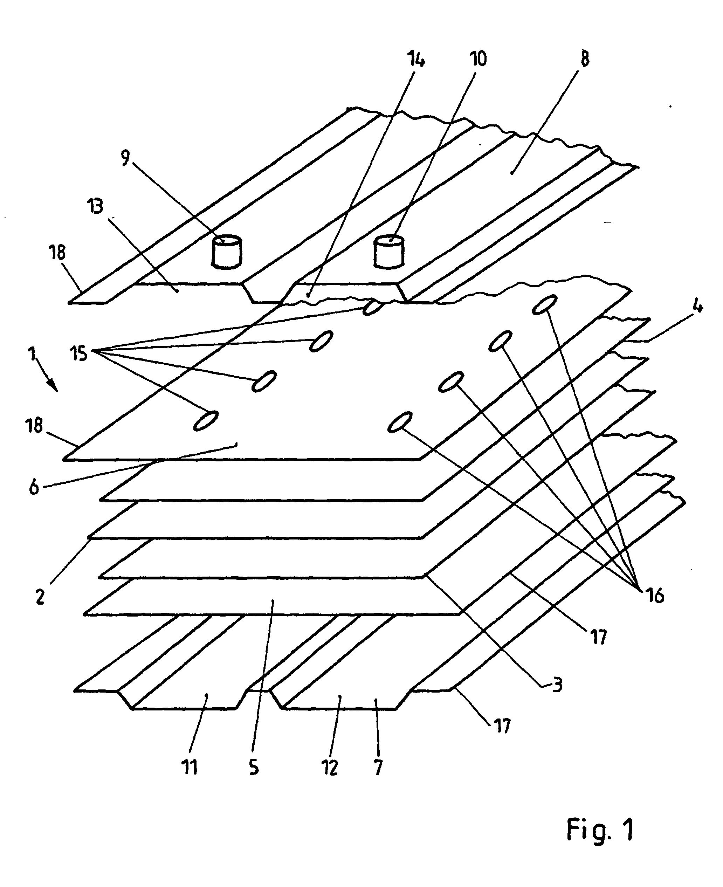

Die in Figur 1 in ihren Bestandteilen dargestellte Brennstoffzelle 1 weist als zentrale Schicht 2 eine Polymermembran auf, wie sie in ihrer Zusammensetzung und ihrem Aufbau für sogenannte PEM-Brennstoffzellen grundsätzlich bekannt ist. Angrenzend an die Polymermembran 2 sind Diffusorschichten 3 und 4 vorgesehen, wobei die Diffusorschicht 3 hier eine Wasserstoffdiffusorschicht zum Heranführen von Wasserstoff an die Polymermembran 2 und die Diffusorschicht 4 eine Sauerstoffdiffusorschicht 4 für das Heranführen von Sauerstoff an und das Abführen von Wasser von der Polymerschicht 2 ist. Rückwärtig an die Diffusorschichten 3 und 4 grenzen Flächenelektroden 5 und 6 an, die bei der zusammengebauten Brennstoffzelle in innigem Kontakt mit der jeweiligen Diffusorschicht stehen. Die Flächenelektroden 5 und 6 sind hier als gelochte Blechbandabschnitte ausgebildet. Auf der Rückseite der Flächenelektroden 5 und 6 sind Abdeckungen 7 und 8 vorgesehen, die hier jeweils aus einem formgewalzten Blechprofilabschnitt ausgebildet sind, der mit Gasanschlüssen 9 und 10 versehen ist. Die Gasanschlüsse sind dabei nur an der oberen Abdeckung 8 sichtbar. Sie können an einem oder beiden Enden der Brennstoffzelle vorgesehen sein. Dargestellt ist in Figur 1 nur ein Ende der Brennstoffzelle 1. Bei der zusammengebauten Brennstoffzelle 1 bilden sich zwischen den Abdeckungen 7 und 8 und den davor angeordneten Flächenelektroden 5 und 6 jeweils zwei Gasführungskanäle 11 und 12 bzw. 13 und 14 aus. Die Gasführungskanäle sind durch Verschweißen der Abdeckungen 7 und 8 und der Flächenelektroden 5 und 6 in ihren Randbereichen sowie in ihrer jeweiligen Mitte gegeneinander abgedichtet. Eine hier nicht dargestellte Abdichtung ist auch in den Endbereichen der Brennstoffzelle 1 gegeben. Allerdings sind in den Flächenelektroden 5 und 6 Durchbrechungen 15, 16 vorgesehen, die hier nur bei der Flächenelektrode 6 sichtbar sind und über die die Gasführungskanäle 13 und 14 mit der vor der Flächenelektrode 6 liegenden Diffusorschicht 4 kommunizieren. Bei an eine Gasversorgung angeschlossener Brennstoffzelle 1 herrscht in dem einen Gasführungskanal 13 ein Überdruck vor, der Sauerstoff über die Durchbrechungen 15 in die Diffusorschicht 4 einpreßt. Sauerstoff und aus der Diffusorschicht 4 abzuführendes Wasser wird durch die Durchbrechungen 16 in den Gasführungskanal 14 herausgedrückt, der zu diesem Zweck zusätzlich unter Unterdruck gesetzt sein kann. Auf der Wasserstoffseite der Brennstoffzelle 1 sind die Verhältnisse entsprechend, nur daß hier kein Wasser abgeführt, sondern möglicherweise über den Gasführungskanal 11 zusammen mit dem Wasserstoff als Brenngas zugeführt werden muß, um die Funktion der Brennstoffzelle 1 auch bei großen Flächenleistungen aufrecht zu erhalten. Da der Strömungsquerschnitt der Gasführungskanäle 13 und 14 im Vergleich zu dem Strömungswiderstand in der Diffusorschicht 4 sehr groß ist, können auch bei einer sehr langen Brennstoffzelle 1 gleichmäßige Bedingungen über die gesamte Länge der Brennstoffzelle 1 eingestellt werden, was die Druckverhältnisse zwischen den Durchbrechungen 15 und 16 anbelangt. So können sehr große Brennstoffzellen in allen Bereichen zuverlässig mit Gas versorgt und damit sehr große Ströme in einer Brennstoffzelle erzeugt werden. Eine seitliche Abdichtung der Brennstoffzelle zwischen den Flächenelektroden 5 und 6, d. h. im Randbereich der Polymermembran und der Diffusorschichten 3 und 4 erfolgt vorzugsweise durch Vergießen mit einem Kleb- oder einem anderen Kunststoff. Das dichtende Verschweißen der Flächenelektroden mit den Abdeckungen kann mit Hilfe eines Lasers durchgeführt werden. Die Durchbrechungen 15 und 16 können beispielsweise durch Ausstanzen in die Flächenelektroden eingebracht sein. Vorzugsweise befinden sie sich im jeweiligen äußeren Randbereich des darüber angeordneten Gasführungskanals 13 bzw. 14. Eine elektrische Kontaktierung der Brennstoffzelle 1 zum Abgreifen des in ihr erzeugten Stroms ist bei der Ausführungsform gemäß Figur 1 durch nach rechts überstehende Längskanten 17 der Flächenelektrode 5 und der Abdeckung 7 und durch nach links überstehende Längskanten 18 der Flächenelektrode 6 und der Abdeckung 8 vorgesehen. Dabei sind die Flächenelektroden 5 und 6 und die Abdeckungen 7 und 8 jeweils identisch ausgebildet.

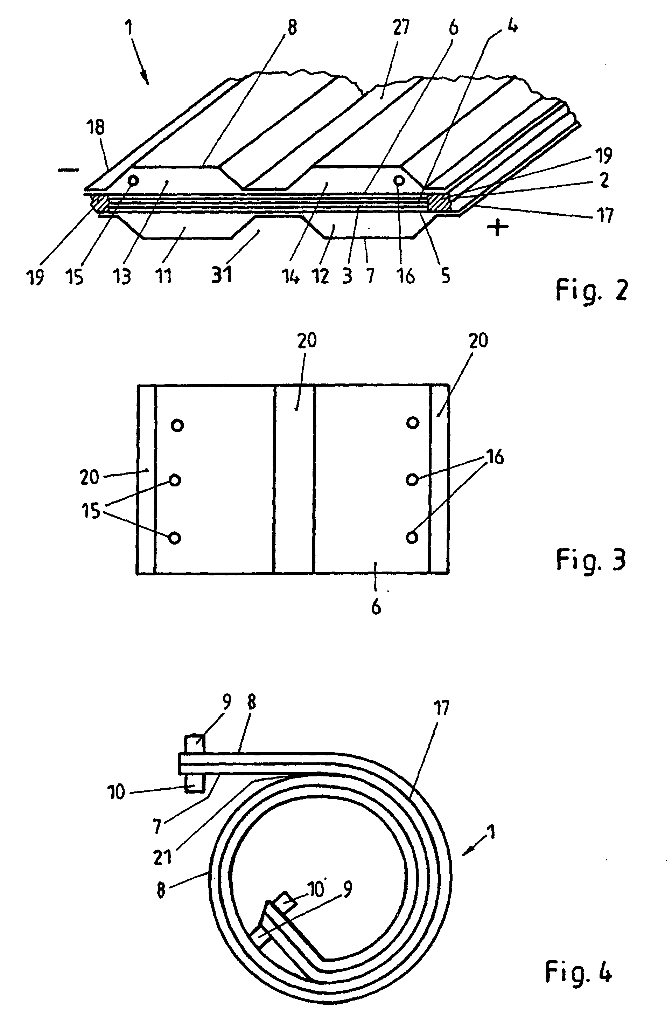

Figur 2 zeigt eine leicht abgewandelte Ausführungsform der Brennstoffzelle 1 in perspektivischer Schnittdarstellung. Hier ist die Brennstoffzelle zusammengebaut und es sind die seitlichen Vergußbereiche 19 sichtbar. Die Abwandlung der Brennstoffzelle 1 gemäß Figur 2 gegenüber derjenigen gemäß Figur 1 bezieht sich darauf, daß die Abdeckungen 8 hier keine unterschiedlich ausgebildeten Längskanten aufweisen, sondern bezüglich der Längsmittelebene der Brennstoffzelle 1 seitlich versetzt zueinander angeordnet sind, so daß aus diesem Grund die Längskanten 17, 18 der unteren Abdeckung 7 nach rechts und der oberen Abdeckung 8 nach links überstehen.

Der Längsschnitt gemäß Figur 3 zeigt bei einer Ansicht auf die Flächenelektrode 6 von oben die Kontaktbereiche 20 mit der darüber angeordneten Abdeckung und die Durchbrechungen 15 und 16, die zu der darunterliegenden Diffusorschicht 4 führen.

Figur 4 zeigt eine aufgewickelte Brennstoffzelle 1, bei der die Gasanschlüsse 9 und 10, die zu jeweils einem Paar von Gasführungskanälen 13, 14 bzw. 11, 12 führen, an einander abgewandten Enden der Brennstoffzelle 1 angeordnet sind. Die Brennstoffzelle 1 weist durch die Aufwicklung besonders kompakte Abmessungen auf, so daß auf kleinem Raum ein relativ großer Strom erzeugt werden kann. Bei der Wickelanordnung gemäß Figur 4 oder 6 ist es wichtig, daß die aneinander zur Anlage kommenden Abdeckungen 7 und 8 gegeneinander isoliert sind. Hierzu ist eine Isolationsschicht 21 mit eingewickelt. Bei der Wickelanordnung gemäß Figur 4 können aus Figur 2 hervorgehende Sicken 31 an den Rückseiten der Abdeckungen 7 und 8 zur Ausbildung von Kühlwasserkanälen genutzt werden. Diese Kühlwasserkanäle verlaufen genau dort in der Mitte der Brennstoffzelle 1, wo die Kühlung am sinnvollsten ist. Die mit dem Kühlwasser abgeführte Wärme kann innerhalb eines Kraft-Wärme-Verbunds einer eigenen Nutzung zugeführt werden. Die Kontaktierung der Brennstoffzelle 1 gemäß Figur 4 kann durch hier nicht dargestellte seitliche Kontaktplatten erfolgen, die an den Längskanten 17 und 18 anliegen. Der großflächige Kontakt an den Längskanten verhindert eine unerwünschte Erhöhung des Kontaktwiderstands zu der Brennstoffzelle 1.

Zur Vergrößerung der erzeugten Spannung ist es erforderlich, eine Mehrzahl von Brennstoffzellen 1 in Reihe zu schalten, wie dies in Figur 5 angedeutet ist. Das heißt, Brennstoffzellen werden so seitlich aneinander gereiht und elektrisch miteinander verbunden, daß ein Pluspol der einen Brennstoffzelle immer mit einem Minuspol der darauffolgenden Brennstoffzelle verbunden ist. So addieren sich die Einzelspannungen der Brennstoffzellen. Die Reihenschaltung kann bei der Brennstoffzelle 1 mit überstehenden Längskanten 17 und 18 einfach dadurch realisiert werden, daß unter Zwischenordnung einer Kontaktplatte 22 immer eine Längskante 17 mit einer Längskante 18 verbunden wird. An den freibleibenden äußeren Längskanten 17 und 18 kann dann die vergrößerte Spannung abgegriffen werden. Dies ist in Figur 5 für eine Mehrzahl von aufgewickelten Brennstoffzellen 1 gemäß Figur 4 dargestellt, wobei die zeichnerische Darstellung der Reihenschaltung der Brennstoffzellen im Bereich der dritten Brennstoffzelle abgebrochen ist. Die massiv gehaltenen Kontaktplatten 22 können beispielsweise aus Kupfer bestehen und fest an die Längskanten 17 und 18 angedrückt sein.

Die in Figur 6 dargestellte Ausführungsform der Brennstoffzelle 1 unterscheidet sich von der Ausführungsform gemäß den Figuren 1 ff. durch einen mehrteiligen Aufbau der Abdeckungen 7 und 8. Die Abdeckungen 7 und 8 bestehen jeweils aus Profilblechabschnitten 23, die durch Abstandhalter 24 im Abstand zu den Flächenelektroden 5 und 6 angeordnet sind. Die Profilierung der Profilblechabschnitte 23 umfaßt Sicken 25, die die Abstandhalter 24 seitlich fixieren und die zur Abstützung von Führungsschnüren 26 dienen, die in die Diffusorschichten 3 und 4 eingreifen und diese seitlich fixieren. Die Abstandhalter 24 können aus Kunststoff ausgebildet sein. Sie sind aber vorzugsweise leitend, um auch die Profilblechabschnitte 23 zur Ableitung des in der Brennstoffzelle 1 erzeugten Stroms zu nutzen. Außerdem sind Sicken 25 auch in den hier als gelochte Profilblechabschnitte ausgebildeten Flächenelektroden 5 und 6 vorgesehen. Die Sicken 25 in den Flächenelektroden sind den Sicken 25 in den Profilblechabschnitten 23 entgegengerichtet. Weiterhin erstrecken sich die Vergußbereiche 19 hier über die gesamte Höhe der Brennstoffzelle 1. Die Längskanten 17 und 18 der Elektroden 5 und 6 sowie der zugehörigen Profilblechabschnitte 23 der Abdeckungen 7 und 8 sind plan mit den Vergußbereichen 19 abgeschliffen, wodurch sich ebene Anlageflächen 27 ergeben, über die die Längskanten 17 und 18 leicht vorstehen, wenn beispielsweise das Material in den Vergußbereichen 19 leicht schrumpft oder unter seitlichen Druck gesetzt wird. Die Brennstoffzelle 1 gemäß Figur 6 kann besonders leicht aufgewickelt werden, da es kein Bauteil gibt, das einen hohen Widerstand gegenüber den beim Wickeln auftretenden Biegekräften aufweist. Durch die beim Wickeln auftretenden relativen Verschiebungen der einzelnen Materialien gegeneinander ist es sinnvoll, die Materialien erst beim Wickeln selbst zusammenzufügen und erst auch beim Wickeln selbst oder noch später, d. h. im gewickelten Zustand, gegeneinander abzudichten. Dies spricht ganz besonders für selbstdichtende Materialien für die Abstandhalter 24.

Die Ausführungsform der Brennstoffzelle 1 gemäß Figur 7 unterscheidet sich von derjenigen gemäß Figur 6 dahingehend, daß nicht in jeder einzelnen Sicke in den Flächenelektroden 5 und 6 jeweils eine Führungsschnur 26 angeordnet ist. Vielmehr ist wechselweise nur an einer der beiden einander gegenüberliegenden Sicken 25 eine Führungsschnur 26 angeordnet. Hierdurch kommt es zu einer erwünschten seitlichen Straffung der Diffusorschichten 3 und 4 und der dazwischen angeordneten Polymermembran 2. Der wesentliche Unterschied zwischen den beiden Ausführungsformen ist jedoch darin zu sehen, daß bei der Ausführungsform gemäß 7 auf der Seite jeder Flächenelektrode 5 und 6 jeweils drei Gasführungskanäle 11, 12 und 12' bzw. 13, 14 und 14' vorgesehen sind. So ist der jeweils unter Überdruck stehende Gasführungskanal 11 bzw. 13 zentral angeordnet und von zwei auf geringerem Druck oder auf Unterdruck stehenden Gasführungskanälen 12 und 12' bzw. 14 und 14' umgeben. Dabei sind die Durchbrechungen 15 in den zentralen Gasführungskanälen 11 und 13 ihrerseits zentral angeordnet, während sich die Durchbrechungen 16 wie bei den anderen Ausführungsformen im Randbereich der Brennstoffzelle 1 befinden.

Die Ausführungsform der Brennstoffzelle 1 gemäß Figur 8 ist in anderer Weise gegenüber derjenigen gemäß Figur 6 modifiziert. Zum einen weisen hier alle Sicken 25 eine einheitliche Richtung auf. Das heißt sie sind zwischen den Flächenelektroden 5 und 6 und den zugehörigen Profilblechabschnitten 23 der Abdeckungen 7 und 8 nicht gegeneinander gerichtet. In der Folge entfällt die Notwendigkeit von Führungsschnüren 26, und beim Aufwickeln der Brennstoffzelle 1 gemäß Figur 8 werden die einzelnen Lagen durch die unter Zwischenordnung einer Isolationsschicht 21 im Bereich der Sicken 25 ineinander eingreifenden Lagen der Brennstoffzelle 1 seitlich gegeneinander geführt. Das besondere Merkmal der Brennstoffzelle 1 gemäß Figur 8 besteht jedoch darin, daß die Gasführungskanäle 11 bis 14 mit Stabilisierungskörpern 28 gefüllt sind. Die Stabilisierungskörper 28 weisen in der Haupterstreckungsrichtung der Gasführungskanäle 11 bis 14 einen geringen Durchströmungswiderstand für das Brenngas, d. h. hier den Wasserstoff, und den Sauerstoff auf. Gleichzeitig sind sie senkrecht zu der Polymermembran 2 druckfest. Damit verhindern sie einerseits ein Zusammendrücken der Gasführungskanäle 11 bis 14, wodurch die Gasversorgung abgeschnürt werden könnte. Andererseits sorgen sie für eine gleichmäßige Übertragung einer Anpreßkraft, die zwischen den äußeren Profilblechabschnitten 23 wirkt, auf den Übergang zwischen den Flächenelektroden 5 und 6 zu den davor befindlichen Diffusorschichten 3 und 4. Dies ist insbesondere bei einer Wickelanordnung der Brennstoffzelle 1 sinnvoll, wenn durch das Wickeln selbst derartige Anpreßkräfte aufgebracht werden und gleichmäßig und zerstörungsfrei verteilt werden müssen. Neben dem Aufbringen der Anpreßkraft durch das Wickeln kann eine zur Kontaktierung der Flächenelektroden notwendige Anpreßkraft bei der neuen Brennstoffzelle beispielsweise auch durch einen sich an den einzelnen Wickellagen abstützenden Gasdruck in den Gasführungskanälen 11 bis 14 und/oder durch einen expandierbares Kern im Zentrum der Wickelanordnung in Verbindung mit einem die Wickelanordnung umgebenden und abstützenden druckfesten Schlauch und/oder durch einen seinen Innendurchmesser verringernden Schlauch um die Wickelanordnung in Verbindung mit einem die Wickelanordnung abstützenden Kern im Zentrum der Wickelanordnung aufgebracht werden, wobei diese letzten Maßnahmen in den Figuren zwar nicht explizit dargestellt aber auch so unmittelbar nachzuvollziehen sind. Der Schlauch kann beispielsweise seinerseits durch Wickeln von Bandmaterial um die Wickelanordnung ausgebildet sein und seinen Innendurchmesser durch einen Längenschrumpfungsprozeß dieses Bandmaterials verringern.

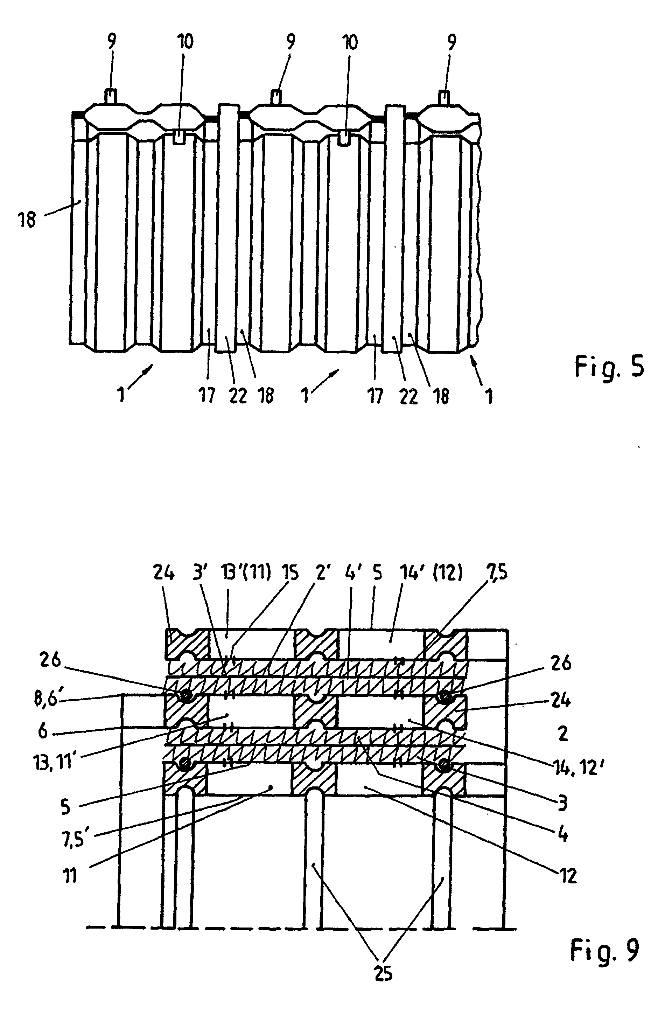

Bei der Ausführungsform der neuen Brennstoffzelle gemäß Figur 9 handelt es sich um eine Wickelanordnung, die ohne Isolierschicht zwischen den einzelnen Lagen auskommt und bei der die jeweiligen Abdeckungen 7 und 8 innerhalb der Wickelanordnung zugleich als weitere Flächenelektroden 5' und 6' dienen, zwischen denen eine zusätzliche Polymermembran 2' mit angrenzenden Diffusorschichten 3' und 4' angeordnet ist. Im Ergebnis ergibt sich eine Parallelschaltung von zwei Brennstoffzellen, bei der die Gasführungskanäle 11 bis 14 ohne zusätzliche Abdeckungen ausschließlich unter Verwendung der Abstandhalter 24 ausgebildet sind. Der Übersichtlichkeit halber sind in Figur 9 die Vergußbereiche 19 nicht eingezeichnet.

Die Ausführungsform der Brennstoffzelle 1 gemäß Figur 10 weist Flächenelektroden 5 und 6 und Abdeckungen 7 und 8 auf, die aus mit Kunststoff armiertem Graphit bestehen. Dabei sind die Abdeckungen 7 und 8 aus Abstandhaltern 24 und Deckschichten 29 ausgebildet. Mit Kunststoff armierter Graphit als Streifen- bzw. Bahnenmaterial ist bekannt. Er kann zur weiteren Verstärkung mit einer eingebetteten Metallfolie versehen sein. Das bekannte Material weist eine recht gute elektrische Leitfähigkeit in seiner Haupterstreckungsebene auf, während die Leitfähigkeit senkrecht zu seiner Haupterstreckungsebene relativ kleiner ist. Diese Verteilung der elektrischen Leitfähigkeiten wird bei der Brennstoffzelle 1 gemäß Figur 1 in soweit ausgenutzt, als daß der Abgriff des in der Brennstoffzelle 1 erzeugten Stroms seitlich, d. h. in der Haupterstreckungsebene der Flächenelektroden 5 und 6 und der Deckschichten 29 erfolgt. Die Brennstoffzelle 1 gemäß Figur 10 ist besonders leicht durch Aufwickeln herstellbar, weil bei straffer Wicklung keine zusätzlichen Dichtmaterialien benötigt werden. Auch im Randbereich der Diffusorschichten 3 und 4 und der Polymermembran 2 reichen dichtende Abstandhalter 30 aus, die sogar aus demselben Graphit/Kunststoff-Material bestehen können, wie die Abstandhalter 24, wenn die Polymerfolie 2 einen unmittelbaren Kontakt der Abstandhalter 30 auf beiden Seiten der Polymermembran 2 verhindert. Auch bei der Brennstoffzelle 1 gemäß Figur 10 ist vorgesehen, den in der Brennstoffzelle 1 erzeugten Strom über die seitlich überstehenden Längskanten 17 und 18 der Flächenelektroden 5 und 6 und der Abdeckungen 7 und 8 abzugreifen.

### BEZUGSZEICHENLISTE

- 1 -: Brennstoffzelle
- 2 -: Polymermembran
- 3 -: (Wasserstoff-)Diffusorschicht
- 4 -: (Sauerstoff-)Diffusorschicht
- 5 -: Flächenelektrode
- 6 -: Flächenelektrode
- 7 -: Abdeckung
- 8 -: Abdeckung
- 9 -: Gasanschluß
- 10 -: Gasanschluß

- 11 -: Gasführungskanal
- 12 -: Gasführungskanal
- 13 -: Gasführungskanal
- 14 -: Gasführungskanal
- 15 -: Durchbrechung
- 16 -: Durchbrechung
- 17 -: Längskante
- 18 -: Längskante
- 19 -: Vergußbereich
- 20 -: Kontaktbereich

- 21 -: Isolationsschicht
- 22 -: Kontaktplatte
- 23 -: Profilblechabschnitten
- 24 -: Abstandhalter
- 25 -: Sicken
- 26 -: Führungsschnüren
- 27 -: Anlagefläche
- 28 -: Stabilisierungskörpern
- 29 -: Deckschicht
- 30 -: Abstandhalter
- 31 -: Sicken

## Patentansprüche

1. Brennstoffzelle (1) mit einer zentralen Polymermembran (2), mit die Polymermembran (2) beidseitig bedeckenden Diffusorschichten (3, 4), mit die Diffusorschichten (3, 4) rückwärtig flächig abstützenden, Durchbrechungen (15, 16) aufweisenden Flächenelektroden (5, 6) und mit einer mindestens einen Gasanschluß (9, 10) aufweisenden rückwärtigen Abdeckung (7, 8) für mindestens eine der Flächenelektroden (5, 6), wobei zwischen der mindestens einen der Flächenelektroden (5, 6) und der zugehörigen Abdeckung (7, 8) mindestens zwei parallel zueinander verlaufende Gasführungskanäle (11, 12; 13, 14) ausgebildet sind, die zum Aufbau eines Druckunterschieds gegeneinander und gegenüber der Umgebung abgedichtet sind, wobei Durchbrechungen (15, 16) in der Flächenelektrode (5, 6)) von dem einen Gasführungskanal (11, 13) in die angrenzende Diffusorschicht (3, 4) und von der Diffusorschicht (3, 4) in den anderen Gasführungskanal (12, 14) münden, und wobei die Brennstoffzelle (1) in der Haupterstreckungsrichtung der Gasführungskanäle (11, 13) eine größere Baulänge aufweist als senkrecht dazu.

2. Brennstoffzelle nach Anspruch 1, **dadurch gekennzeichnet, daß** die Abdeckung (7, 8) aus einem oder mehreren Endlosprofilabschnitten ausgebildet ist.

3. Brennstoffzelle nach Anspruch 2, **dadurch gekennzeichnet, daß** der oder die Endlosprofilabschnitt(e) mindestens einen formgewalzten Blechprofilabschnitt aufweisen.

4. Brennstoffzelle nach einem der Ansprüche 1 bis 3, **dadurch gekennzeichnet, daß** die mindestens eine der Flächenelektroden (5, 6) aus einem gelochten Blechabschnitt ausgebildet ist.

5. Brennstoffzelle nach einem der Ansprüche 1 bis 3, **dadurch gekennzeichnet, daß** die mindestens eine der Flächenelektroden (5, 6) Graphit als elektrisch leitende Komponente aufweist.

6. Brennstoffzelle nach einem der Ansprüche 1 bis 5, **dadurch gekennzeichnet, daß** entgegengesetzte elektrische Pole für einen Stromabgriff von der Brennstoffzelle (1) an ihren einander gegenüberliegenden und parallel zu den Gasführungskanälen (11, 12; 13, 14) verlaufenden Längskanten (17, 18) durch einzeln überstehende Ränder der Flächenelektroden (5, 6) und/oder der elektrisch leitend mit den Flächenelektroden (5, 6) verbundenen Abdeckungen (7, 8) ausgebildet sind.

7. Brennstoffzelle nach einem der Ansprüche 1 bis 7, **dadurch gekennzeichnet, daß** sie der Länge der Gasführungskanäle (11, 12; 13, 14) nach aufgewickelt ist.

8. Brennstoffzelle nach Anspruch 7, **dadurch gekennzeichnet, daß** zwischen den rückwärtig aneinander anliegenden Abdeckungen (7, 8) von beiden Flächenelektroden (5, 6) eine Isolationsschicht (21) eingewickelt ist.

9. Brennstoffzelle nach Anspruch 7, **dadurch gekennzeichnet, daß** als Paar von Abdeckungen zwischen zwei ungleichnamigen Flächenelektroden (5, 6) eine weitere Polymermembran (2') mit angrenzenden Diffuserschichten (4', 3') und mit diese abstützenden Flächenelektroden (6', 5') eingewickelt ist, wobei immer gleichnamige Elektroden (5', 5; 6, 6') unter Ausbildung der Gasführungskanäle (11, 12; 13, 14) zwischen ihnen aneinander grenzen.

10. Brennstoffzelle nach einem der Ansprüche 7 bis 9, **dadurch gekennzeichnet, daß** sie mit einer Mehrzahl gleicher Brennstoffzellen (1) unter Zwischenordnung massiver Kontaktplatten seitlich aneinandergereiht ist.

## Claims

1. Fuel cell (1) comprising a central polymer membrane (2), diffusion layers (3, 4) covering the polymer membrane (2) on both sides, plane electrodes (5, 6) supporting the diffusion layers (3, 4) on their backsides and provided with openings (15, 16), and a rear cover (7, 8) for at least one of the plane electrodes (5, 6) having at least one gas port (9, 10); at least two gas leading channels (11, 12; 13, 14) being formed between at least one of the plane electrode (5, 6) and the associated cover (7, 8), and running in parallel to each other, and being sealed against each other and against the surroundings for building up a pressure difference; openings (15, 16) in the plane electrodes leading from the one gas leading channel (11, 13) into the adjacent diffusion layer (3, 4), and from the diffusion layer (3, 4) into the other gas leading channel (12, 14); and the fuel cell (1) having a greater constructional length in the direction of main extension of the gas leading channels (11, 13) than in a direction perpendicular thereto.

2. Fuel cell (1) according to claim 1, **characterized in that** the cover (7, 8) is formed from one ore more endless profile sections.

3. Fuel cell (1) according to claim 2, **characterized in that** the endless profile sections include at least one form rolled profiled metal sheet section.

4. Fuel cell (1) according to any of the claims 1 to 3, **characterized in that** at least one of the plane electrodes (5, 6) is formed from a stamped our metal sheet section.

5. Fuel cell (1) according to any of the claims 1 to 3, **characterized in that** at least one of the plane electrodes (5, 6) comprises graphite as an electrically conducting component.

6. Fuel cell (1) according to any of the claims 1 to 5, **characterized in that** opposing electrical poles for taking off current from the fuel cell (1) are formed at its opposing long edges (17, 18) running in parallel to the gas leading channels (11, 12; 13, 14) by single rims of the plane electrodes (5, 6) and/or the covers (7, 8) electrically connected to the plane electrodes (5, 6).

7. Fuel cell (1) according to any of the claims 1 to 7, **characterized in that** it is rolled up in the direction of the length of the gas leading channels (11, 12; 13, 14).

8. Fuel cell (1) according to claim 7, **characterized in that** an isolating layer is rolled in between the covers (7, 8) of two plane electrodes (5, 6) leaning against each other back to back.

9. Fuel cell (1) according to claim 7, **characterized in that** a further polymer membrane (2') together with adjacent diffusion layers (4', 3') and with plane electrode (6', 5') supporting these diffusion layers (4', 3') are rolled in as a pair of covers between two plane electrodes (5, 6) of opposing poles; electrodes (5', 5; 6, 6') of the same pole arranged adjacent each other forming the gas leading channels (11, 12; 13, 14) there between.

10. Fuel cell (1) according to any of the claims 7 to 9, **characterized in that** it is arranged side by side with a plurality of further identical fuel cells 1 with massive contact plates arranged there between.

## Revendications

1. Pile à combustible (1) comportant une membrane polymère (2) centrale, des couches de diffusion (3, 4) recouvrant la membrane polymère (2) sur les deux faces, des électrodes plates (5, 6) prenant appui à plat à l'arrière des couches de diffusion (3, 4) et présentant des ajours (15, 16), et comportant une couverture (7, 8) arrière avec au moins un branchement de gaz (9, 10) pour au moins l'une des électrodes plates (5, 6), entre au moins l'une des électrodes plates (5, 6) et la couverture (7, 8) correspondante étant réalisés au moins deux canaux de guidage de gaz (11, 12 ; 13, 14) parallèles l'un à l'autre et qui sont rendus étanches l'un par rapport à l'autre et par rapport au milieu ambiant pour constituer une pression différentielle, des ajours (15, 16) débouchant dans l'électrode plate (5, 6) depuis un canal de guidage de gaz (11, 13) dans la couche de diffusion (3, 4) adjacente et de la couche de diffusion (3, 4) dans l'autre canal de guidage de gaz (12, 14), et la pile à combustible (1) présentant, dans la direction de l'étendue principale des canaux de guidage de gaz (11, 13), une plus grande longueur de construction que perpendiculairement à cette direction.

2. Pile à combustible selon la revendication 1, **caractérisée en ce que** la couverture (7, 8) est réalisée dans un ou plusieurs tronçons de profilés sans fin.

3. Pile à combustible selon la revendication 2, **caractérisée en ce que** le ou les tronçons de profilés sans fin comportent au moins un tronçon de profilé en tôle formé par laminage.

4. Pile à combustible selon l'une des revendications 1 à 3, **caractérisée en ce qu'**au moins l'une des électrodes plates (5, 6) est réalisée dans un tronçon de tôle perforée.

5. Pile à combustible selon l'une des revendications 1 à 3, **caractérisée en ce qu'**au moins l'une des électrodes plates (5, 6) contient du graphite comme composant électriquement conducteur.

6. Pile à combustible selon l'une des revendications 1 à 5, **caractérisée en ce que** des pôles électriques opposés pour prélever du courant de la pile à combustible (1), sont réalisés, sur leurs bords longitudinaux (17, 18) opposés l'un à l'autre et s'étendant parallèlement aux canaux de guidage de gaz (11, 12; 13, 14), par des bords dépassant individuellement des électrodes plates (5, 6) et/ou des couvertures (7, 8) reliées de manière électriquement conductrice aux électrodes plates (5, 6).

7. Pile à combustible selon l'une des revendications 1 à 6, **caractérisée en ce qu'**elle est enroulée sur la longueur des canaux de guidage de gaz (11, 12 ; 13, 14).

8. Pile à combustible selon la revendication 7, **caractérisée en ce qu'**une couche d'isolation (21) est enroulée à l'intérieur entre les couvertures (7, 8) s'appliquant l'un contre l'autre à l'arrière des deux électrodes plates (5, 6).

9. Pile à combustible selon la revendication 7, **caractérisée en ce qu'**on enroule à l'intérieur, comme paire de couvertures entre deux électrodes plates (5, 6) de polarité différente, une autre membrane polymère (2') avec couches de diffusion (4', 3') adjacentes et avec des électrodes plates (6', 5') soutenant celles-ci, des électrodes (5', 5 ; 6, 6') de même polarité étant toujours adjacentes l'une à l'autre et formant entre elles les canaux de guidage de gaz (11, 12; 13, 14).

10. Pile à combustible selon l'une des revendications 7 à 9, **caractérisée en ce qu'**elle est mise en série avec une pluralité de piles à combustible (1) identiques par interposition de plaques de contact massives.
